# EUROPEAN PATENT SPECIFICATION

(11) **EP 4 375 561 B1**
(45) Date of publication and mention of the grant of the patent: **18.03.2026**
(21) Application number: 23211772.1
(22) Date of filing: 23.11.2023
(51) Int. Cl.: F17C 9/02

(54) **LIQUID HYDROGEN SYSTEM**
FLÜSSIGWASSERSTOFFSYSTEM
SYSTÈME D'HYDROGÈNE LIQUIDE

(30) Priority: 24.11.2022 JP 2022187644
(43) Date of publication of application: 29.05.2024
(73) Proprietor: TOYOTA JIDOSHA KABUSHIKI KAISHA, Toyota-shi, Aichi-ken, 471-8571 (JP)
(72) Inventor: YAMAMOTO, Ryosuke, Toyota-shi, Aichi-ken, 471-8571 (JP); SAITO, Norihiko, Toyota-shi, Aichi-ken, 471-8571 (JP); ITO, Naoaki, Toyota-shi, Aichi-ken, 471-8571 (JP)
(74) Representative: Cabinet Beau de Loménie

(56) References cited:
- EP-B1- 3 722 652
- DE-A1- 102017 222 926
- US-A1- 2002 069 857
- US-B2- 10 955 088

## Description

### CROSS REFERENCE TO RELATED APPLICATION

This application claims priority to Japanese Patent Application No. 2022-187644 filed on November 24, 2022.

### TECHNICAL FIELD

The present specification discloses a liquid hydrogen system for storing hydrogen in a liquid state, converting the hydrogen into a gaseous state, and supplying the hydrogen in the gaseous state to a hydrogen engine.

### BACKGROUND

Conventionally, liquid hydrogen systems in which hydrogen to be supplied to a hydrogen engine is stored in a liquid state have been known. For example, Patent Document 1 discloses a system in which liquid hydrogen stored in a hydrogen tank is extracted by a pump and evaporated to obtain a hydrogen gas which is supplied to a hydrogen engine. When hydrogen is stored in the liquid state as described above, a storage quantity of hydrogen can be increased as compared to a case where hydrogen is stored in the gaseous state.

### CITATION LIST

### PATENT LITERATURE

Patent Document 1: JP 2886204 B

Document EP 3 722 652 B1 relates to a storage container for cryogenic liquid gas with an inner tank for storing the cryogenic liquid gas and with a withdrawal device, wherein the withdrawal device comprises a withdrawal line immersed in the inner tank, wherein the withdrawal line is fluidically connected via a branch to a consumer line so that the liquid gas can be withdrawn by a consumer at a connection of the consumer line, wherein the withdrawal line is fluidically connected via the branch to a return line so that the liquid gas can be returned through the return line into the inner tank, wherein a heat exchanger is arranged in the withdrawal line upstream of the branch so that liquid gas withdrawn from the inner tank can be heated and converted into the gas phase, wherein a compressor is arranged in the withdrawal line upstream of the branch and after the heat exchanger so that the gaseous liquid gas can be compressed by the compressor and a partial flow of the compressed liquid gas can be fed via the consumer line to a consumer and another partial flow of the compressed liquid gas can be fed back via the return line to the internal tank.

Document US 2002/069857 A1 relates to a method and an apparatus for conveying a cryogenically-stored fuel to an internal combustion engine to provide a combustible working substance.

In liquid hydrogen systems, when a quantity of hydrogen consumed by the hydrogen engine increases abruptly, a huge quantity of liquid hydrogen is extracted, as a matter of course, from the hydrogen tank in a short time. Extraction of the huge quantity of liquid hydrogen might cause an excessive decrease in the internal pressure of the hydrogen tank. When the internal pressure of the hydrogen tank is excessively decreased, the pump might fail to discharge the liquid hydrogen.

Conventional techniques, such as a technique of Patent Document 1, have not considered such a decrease in the internal pressure resulting from extraction of liquid hydrogen. As a result, in the conventional techniques there may be cases where hydrogen cannot be supplied to the hydrogen engine appropriately.

Under the circumstances, the present specification discloses a liquid hydrogen system capable of appropriately supplying hydrogen to a hydrogen engine.

### SUMMARY

A liquid hydrogen system is disclosed herein in accordance with claim 1.

When the return circuit for returning the hydrogen gas is arranged, an excessive decrease in the internal pressure of the hydrogen tank can be prevented. In this way, failure of the pump to discharge liquid hydrogen can be prevented. As a result, hydrogen can be appropriately supplied to the hydrogen engine.

In an aspect of this disclosure, the liquid hydrogen system further includes a controller and a pressure sensor configured to detect the internal pressure of the hydrogen tank as a tank internal pressure. In the liquid hydrogen system, the return circuit includes a return gate valve which is electrically openable and closeable, and the controller is configured to open the return gate value when the tank internal pressure becomes lower than the reference pressure.

With the above- described configuration, it can be ensured that the internal pressure of the hydrogen tank is maintained at or above the reference pressure.

In another aspect of the disclosure, the return circuit further includes a return pressure reducing value which is disposed on a hydrogen tank side of the return gate valve and is configured to output the hydrogen gas after reducing a pressure thereof.

The above-described configuration can prevent an excessive rise in the internal pressure of the hydrogen tank.

In a further aspect of the disclosure, the supply circuit may include a chamber which is fluid connected to the supply circuit upstream from a branch point of the return circuit, and the chamber is configured to temporarily store the hydrogen gas.

With the configuration described above, a small amount of excess or deficiency of hydrogen gas can be compensated for by the hydrogen gas stored in the chamber. As a result, pressure variations of the hydrogen gas can be suppressed, and a response delay in control of hydrogen supply can be accommodated by the chamber. Further, with the above-described configuration, because a return flow quantity of the hydrogen gas can be ignored without causing any problem in calculation of a supply quantity of hydrogen, control of the hydrogen supply can be simplified.

In another aspect of the disclosure, a booster pump configured to pressurize the liquid hydrogen and discharge the pressurized liquid hydrogen may be installed for extracting the liquid hydrogen from the hydrogen tank.

When the booster pump is used, a pressure resistance required of the hydrogen pump can be decreased to a lower level. It should be noted that the use of the booster pump may increase a possibility that the pump becomes unable to discharge the liquid hydrogen as the tank internal pressure is decreased. However, in the liquid hydrogen system disclosed herein, even when the booster pump is used, occurrence of such a situation where the pump fails to discharge the liquid hydrogen can be prevented.

The liquid hydrogen system disclosed herein can appropriately supply hydrogen to the hydrogen engine.

### BRIEF DESCRIPTION OF DRAWINGS

Embodiments of the present disclosure will be described based on the following figures, wherein:
FIG. 1 shows a configuration of a liquid hydrogen system;
FIG. 2 is a block diagram showing operation of a controller to control a motor rotation speed;
FIG. 3 is a graph showing operation of a return gate valve;
FIG. 4 is a flowchart showing an example flow of an operation to control opening and closing of the return gate valve;
FIG. 5 is a flowchart showing another example flow of the operation to control opening and closing of the return gate valve;
FIG. 6 shows another configuration of the liquid hydrogen system; and
FIG. 7 is a block diagram showing another example of the operation of the controller to control a motor rotation speed.

### DESCRIPTION OF EMBODIMENTS

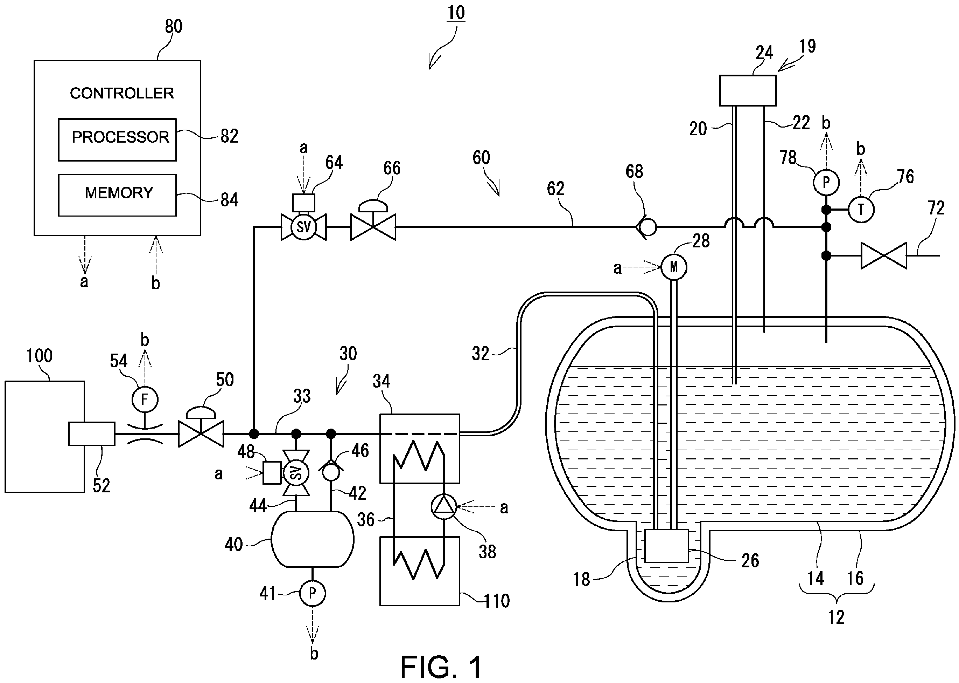

Hereinafter, a configuration of a liquid hydrogen system 10 will be described with reference to the drawings. FIG. 1 schematically shows the configuration of the liquid hydrogen system 10. The liquid hydrogen system 10 is configured to store hydrogen in a liquid state, convert the hydrogen into a gaseous state, and supply a hydrogen engine 100 with the hydrogen in the gaseous state. The liquid hydrogen system 10 and the hydrogen engine 100 are mounted on a vehicle. The structure of the hydrogen engine 100 is not limited to any specific structure. In the following description, a direct injection type hydrogen engine which injects a hydrogen gas directly into an engine cylinder is taken as the hydrogen engine 100.

The liquid hydrogen system 10 includes a hydrogen tank 12 in which liquid hydrogen is stored. The liquid hydrogen tank 12 stores the liquid hydrogen in a thermally insulated manner. For the liquid hydrogen tank 12, a double structure vessel may be used, for example. In this case, the hydrogen tank 12 has an inner tank 14, an outer tank 16 which encloses the inner tank 14, and a vacuum heat insulating layer formed between the inner tank 14 and the outer tank 16.

The hydrogen tank 12 is formed in a spherical or barrel shape in order to maintain exertion of a uniform pressure on an interior wall of the hydrogen tank 12. In addition, the bottom of the hydrogen tank 12 has a collector portion 18 which is depressed from the other portion of the bottom around the collector portion 18. A hydrogen pump 26, which will be described below, is placed in the collector portion 18. In this way, even when a quantity of liquid hydrogen remaining in the hydrogen tank 12 becomes small, the hydrogen pump 26 can be submerged in the liquid hydrogen, which allows the liquid hydrogen to be discharged almost completely.

The liquid hydrogen is maintained at low temperature within the hydrogen tank 12. Further, in the hydrogen tank 12, the pressure of the liquid hydrogen is substantially equal to an atmospheric pressure or slightly higher than the atmospheric pressure, and is 1 Mpa or less, for example. Here, the inner tank 14 is thermally insulated by a vacuum. However, because heat input cannot be prevented completely, the liquid hydrogen stored in the inner tank 14 is naturally evaporated over time. A hydrogen gas (i.e., boil off gas) generated by such natural evaporation of the liquid hydrogen is retained in an upper region within the hydrogen tank 12.

The liquid hydrogen is filled from an external unit through a filling circuit 19 into the hydrogen tank 12. The filling circuit 19 includes a filling channel 20 for delivering the liquid hydrogen, and a release channel 22 for directing the hydrogen gas to the outside. Both the filling channel 20 and the release channel 22 extend from a connector 24 to the inside of the hydrogen tank 12. The filling circuit 19 is configured to be connected via the connector 24 to a filling hose (not illustrated in FIG. 1) installed in an external hydrogen station. Liquid hydrogen stored in the external hydrogen station is supplied through the filling channel 20 into the hydrogen tank 12. Meanwhile, the boil off gas generated during the process of filling the liquid hydrogen is released through the release channel 22 to the outside.

The hydrogen tank 12 is equipped with the hydrogen pump 26 for discharging the stored liquid hydrogen toward the hydrogen engine 100. In this example, the hydrogen pump 26 is a booster pump which discharges liquid hydrogen while increasing a pressure of the liquid hydrogen. The hydrogen pump 26 may be, for example, a piston pump in which a plunger is reciprocated within a cylinder placed in a liquid, to suck and discharge the liquid. In this case, both a suction port and a discharge port of the cylinder are equipped with a check valve. The hydrogen pump 26 is driven by a pump motor 28. When the hydrogen pump 26 having such a pressure increasing function is installed, a level of the pressure resistance required of the hydrogen tank 12 can be lowered.

Specifically, the hydrogen engine 100 in this example is of the direct injection type and is configured to inject the hydrogen gas directly into the engine cylinder as described above. It is necessary that a directly injected hydrogen gas have a pressure (for example, from 5 Mpa to a few tens of Mpa) that is drastically higher than the atmospheric pressure. To acquire such a high-pressure hydrogen gas, the liquid hydrogen must have a sufficiently high pressure before it is evaporated; i.e., when it is in a liquid state. To achieve this, it may be considered to store liquid hydrogen having a high pressure (such as, a few tens of Mpa, for example) within the hydrogen tank 12. This case, however, requires that the pressure resistance of the hydrogen tank 12 be enhanced, which will increase both cost for the hydrogen tank 12 and the weight thereof.

On the other hand, in this example, the pressure of the liquid hydrogen within the hydrogen tank 12 is maintained substantially equal to or slightly higher than the atmospheric pressure, and in an operation to evaporate the liquid hydrogen, only a required quantity of the liquid hydrogen is discharged after the liquid hydrogen is sufficiently pressurized by the hydrogen pump 26. In this way, a hydrogen gas having a sufficiently high pressure can be acquired while avoiding the necessity for enhancing the pressure resistance of the hydrogen tank 12. Further, when a required level of the pressure resistance of the hydrogen tank 12 is lowered, the costs for manufacturing the hydrogen tank 12 can be decreased, and the weight of the hydrogen tank 12 can be accordingly decreased. Moreover, when the required level of the pressure resistance is lowered, it becomes possible to form the hydrogen tank 12 in a shape other than the spherical shape or the barrel shape, leading to a high degree of flexibility in design of the shape of the hydrogen tank 12.

The liquid hydrogen discharged from the hydrogen pump 26 is directed through a supply circuit 30 to the hydrogen engine 100. The supply circuit 30 includes a liquid flow channel 32, a gas flow channel 33, an evaporator 34, a pressure chamber 40, and a supply pressure reducing valve 50. The liquid flow channel 32 is a flow channel designed to direct the liquid hydrogen discharged from the hydrogen pump 26 to the evaporator 34. The evaporator 34 is a heat exchanger configured to exchange heat between the liquid hydrogen and a refrigerant, to thereby convert the liquid hydrogen into a hydrogen gas. The hydrogen gas generated in the evaporator 34 is output to the gas flow channel 33.

A refrigerant flow channel 36 is arranged within the evaporator 34. The refrigerant flow channel 36 is designed to circulate the refrigerant between the evaporator 34 and a heat source 110. The refrigerant is not limited to any specific material, and may be, for example, a gas, such as helium, or a liquid, such as water. Also, no particular limitation is imposed on the heat source 110. Therefore, the heat source 110 may be, for example, the hydrogen engine 110 or a heater which generates heat by electric power. The refrigerant heated by the heat source 110 heats the liquid hydrogen in the evaporator 34. As a result, the liquid hydrogen is evaporated, and the hydrogen gas is generated accordingly. Hydrogen is significantly increased in its volume through evaporation. Here, the refrigerant is pressurized and delivered by a refrigerant pump 38.

The gas flow channel 33 is a flow path designed to direct the hydrogen gas from the evaporator 34 into an injector 52. The gas flow channel 33 is connected via an inflow channel 42 and an outflow channel 44 to the pressure chamber 40. The pressure chamber 40 is a container in which the hydrogen gas is temporarily stored. The pressure chamber 40 is configured to have a hydrogen gas capacity sufficient for covering a response delay in control of hydrogen gas supply. For example, the pressure chamber 40 has a capacity equivalent to several seconds' to 60 seconds' worth of hydrogen consumed at the maximum flow rate by the hydrogen engine 100. When the thus-configured pressure chamber 40 is installed, occurrence of a shortage of hydrogen gas can be prevented even when a quantity of hydrogen consumed by the hydrogen engine 100 is abruptly changed.

The inflow channel 42 is equipped with a check valve 46 to check the flow of the hydrogen gas from the pressure chamber 40 toward the gas flow channel 33. The outflow channel 44 is equipped with a chamber gate valve 48. The chamber gate valve 48 is basically opened while the hydrogen engine 100 is being driven. The inflow channel 42 is located upstream of the outflow channel 44. For this reason, when the pressure in the gas flow channel 33 is higher than the internal pressure of the pressure chamber 40, the check valve 46 is opened to thereby allow the hydrogen gas to flow into the pressure chamber 40. On the other hand, when the internal pressure of the pressure chamber 40 is higher than the pressure in the gas flow channel 33, the hydrogen gas stored in the pressure chamber 40 is supplied through the outflow channel 44 into the gas flow channel 33. As a result, the pressure of the hydrogen gas supplied to the supply pressure reducing valve 50 becomes substantially equal to the internal pressure of the pressure chamber 40.

A pressure sensor 41 detects the internal pressure of the pressure chamber 40. Hereinafter, a value detected by the pressure sensor 41 is referred to as a "hydrogen gas pressure Pgh". As will be described in detail below, a controller 80 is configured to control a rotation speed of the pump motor 28 in such a manner that the hydrogen gas pressure Pgh matches a predetermined target hydrogen gas pressure Pgh*.

The supply pressure reducing valve 50 is arranged downstream of the outflow channel 44. The supply pressure reducing valve 50 reduces the pressure of the hydrogen gas to a pressure suitable for the hydrogen engine 100. The pressure reduced hydrogen gas is supplied through the injector 52 to the hydrogen engine 100. A flow quantity of the hydrogen gas supplied to the hydrogen engine 100 is detected by a flowmeter 54. Hereinafter, the flow quantity of the hydrogen gas detected by the flowmeter 54 is referred to as a "hydrogen gas flow quantity Qgh".

A return circuit 60 is branched from the supply circuit 30 and configured to return the hydrogen gas to the hydrogen tank 12. The return circuit 60 includes a return flow channel 62, a return gate valve 64, a return pressure reducing valve 66, and a check valve 68. The return flow channel 62 is branched from the gas flow channel 33 at a location downstream of the outflow channel 44 and upstream of the supply pressure reducing valve 50. The return flow channel 62 branched from the gas flow channel 33 extends to the hydrogen tank 12 so as to communicate with the inside of the hydrogen tank 12.

The return gate valve 64 is a valve for opening and closing the return flow channel 62, and is controlled to be opened and closed by the controller 80. When the return gate valve 64 is opened, a part of the hydrogen gas flowing through the supply circuit 30 is caused to flow back to the hydrogen tank 12. The return pressure reducing valve 66 is arranged on a downstream side of the return gate valve 64, the downstream side being located farther away from a branching point. The return pressure reducing valve 66 reduces the pressure of the hydrogen gas to a level at which the hydrogen gas can be returned to the hydrogen tank 12 without causing any problems. The check valve 68 is arranged downstream of the return pressure reducing valve 66. The check valve 68 allows only a flow of the hydrogen gas flowing from the return pressure reducing valve 66 toward the hydrogen tank 12 and checks a backflow of the hydrogen gas. The reason for arranging the return circuit 60 will be further described below.

The hydrogen tank 12 is further connected to a boil off channel 72. The boil off channel 72 is configured to be opened when the internal pressure of the hydrogen tank 12 exceeds a predetermined safety value Psf. Once the boil off channel 72 is opened, a part of the hydrogen gas accumulated in the hydrogen tank 12 is released through the boil off channel 72 to the outside. This can prevent an excessive increase in the internal pressure of the hydrogen tank 12. That is, as described above, the inner tank 14 is thermally insulated by a vacuum, although entry of heat into the inner tank 14 is not completely prevented. This causes a part of the stored liquid hydrogen to be naturally evaporated, and a hydrogen gas (so called boil off gas) is accordingly generated. Leaving the thus-generated hydrogen gas as it is will excessively increase the internal pressure of the hydrogen tank 12. To avoid this, the boil off channel 72 is opened to release a part of the hydrogen gas from the hydrogen tank 12 when the internal pressure of the hydrogen tank 12 exceeds the predetermined safety value Psf.

It should be noted that FIG. 1 shows only one boil off channel 72, but a plurality of such boil off channels 72 may be arranged. For example, a first boil off channel which is opened based on a first safety value and a second boil off channel which is opened based on a second safety value that is higher than the first safety value may be arranged. In addition, the boil off channel 72 may be configured to be repeatedly opened and closed, or configured to be unclosable once it is opened. Therefore, an openable and closeable value may be arranged in the boil off channel 72, or a rupture disk which is mechanically destroyed when the pressure exceeds the safety value Psf may be arranged to maintain the boil off channel 72 in an opened state.

The internal pressure and temperature of the hydrogen tank 12 are detected by a pressure sensor 78 and a temperature sensor 76, respectively. Hereinafter, an internal pressure of the hydrogen tank 12 detected by the pressure sensor is referred to as a "tank internal pressure Pt".

The controller 80 controls operation of the liquid hydrogen system 10. The controller 80 is physically implemented by a computer incorporating a processor 82 and a memory 84. The "computer" includes a microcontroller in which a computer system is incorporated into a single integrated circuit. However, the controller 80 is not limited to such a single computer, and may be composed of two or more computers which are physically separated from each other. The controller 80 controls, based on values detected by various sensors, actuation of a plurality of valves and pumps installed in the liquid hydrogen system 10.

Specifically, the controller 80 controls a supply flow quantity of a hydrogen gas supplied to the hydrogen engine 100 in response to a request from an engine controller (not illustrated). The supply flow quantity of the hydrogen gas is proportional to a discharge flow quantity Qlh of liquid hydrogen, and the discharge flow quantity Qlh is proportional to a rotation speed Nm of the pump motor 28. Then, the controller 80 performs feedback control of the rotation speed of the pump motor 28 using, as a feedback value, the hydrogen gas flow quantity Qgh detected by the flowmeter 54. Meanwhile, in addition to the flow quantity of the hydrogen gas, a pressure of the hydrogen gas must be maintained at a suitable value, in order to appropriately drive the hydrogen engine 100. To achieve this, the controller 80 feeds back the hydrogen gas pressure Pgh detected by the pressor sensor 41, to control the rotation speed Nm of the pump motor 28.

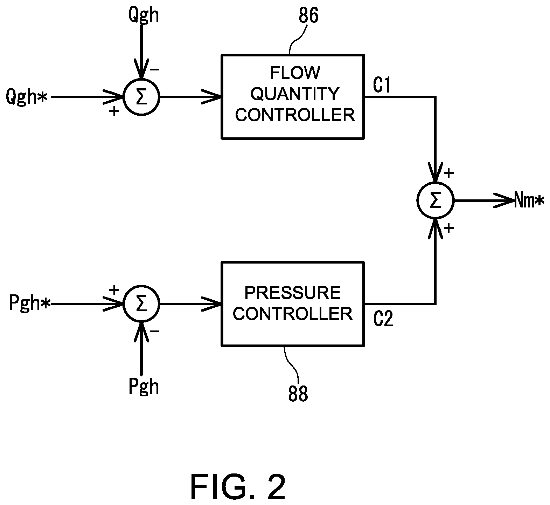

FIG. 2 is a block diagram showing operation to control the motor rotation speed Nm performed by the controller 80. The controller 80 functions as a control block shown in FIG. 2. In FIG. 2, a flow quantity controller 86 is a computing device which applies a predetermined control computation to an input value. The control computation is not limited to specific computations or operations, and may include, for example, at least one of a proportional operation to multiply the input value by a proportional gain, an integral operation to multiply an integral value of the input value by an integral gain, and a differential operation to multiply a differential value of the input value by a differential gain. Similarly, a pressure controller 88 also applies a predetermined control computation to the input value.

As shown in FIG. 2, a flow quantity deviation is calculated in this example by subtracting the hydrogen gas flow quantity Qgh detected by the flowmeter 54 from a target hydrogen gas flow quantity Qgh*. The flow quantity controller 86 receives, as an input, the flow quantity deviation and outputs a first command value C1. Here, the target hydrogen gas flow quantity Qgh* is determined based on, for example, an accelerator opening of a vehicle.

Further, a pressure deviation is calculated by subtracting the hydrogen gas pressure Pgh detected by the pressure sensor 41 from a target hydrogen gas pressure Pgh*. The pressure controller 88 receives, as an input, the pressure deviation and outputs a second command value C2. Here, the target hydrogen gas pressure Pgh* is a value determined based on characteristics of the hydrogen engine 100 and is basically a fixed invariable value. The controller 80 determines a sum of the first command value C1 and the second command value C2 as a motor rotation speed command Nm*, and controls operation of the pump motor 28 based on the motor rotation speed command Nm*.

As is evident from the above explanation, the controller 80 operates the pump motor 28 to discharge liquid hydrogen from the hydrogen tank 12 in response to the request from the hydrogen engine 100. When a quantity of hydrogen consumed by the hydrogen engine 100 is increased, the discharge flow quantity Qlh of liquid hydrogen is accordingly increased, which may, in some cases, cause a decrease of the internal pressure of the hydrogen tank 12.

Specifically, a small quantity of the boil off gas (i.e., hydrogen gas) is always generated within the hydrogen tank 12. Once the discharge flow quantity Qlh of the liquid hydrogen becomes greater than a generation quantity of the boil off gas (hereinafter, referred to as a "boil off quantity Qbf"), a tank internal pressure Pt is gradually decreased.

When the tank internal pressure Pt is excessively decreased, the hydrogen pump 26 is unable to properly discharge liquid hydrogen. In particular, in a case where the hydrogen pump 26 is the booster pump which pressurizes liquid hydrogen, it is necessary that the pressure of liquid hydrogen be increased to a high discharge pressure in order to discharge the liquid hydrogen. However, when the tank internal pressure Pt is decreased and thus the pressure of liquid hydrogen is dropped, the liquid hydrogen cannot be pressurized to the high discharge pressure, resulting in a failure in proper discharging of the liquid hydrogen. To avoid the failure, the tank internal pressure Pt is maintained at or above a predetermined reference pressure; in this example, by releasing the return circuit 60 as appropriate to return a part of the hydrogen gas flowing through the supply circuit 30 back into the hydrogen tank 12.

More specifically, in this example, when the tank internal pressure Pt detected by the pressure sensor 78 becomes lower than a predetermined reference pressure Pst, the return gate valve 64 is opened to direct the hydrogen gas to the hydrogen tank 12. It should be noted that the hydrogen gas flowing through the return gate valve 64 has a pressure higher than the internal pressure of the hydrogen tank 12. For this reason, the return pressure reducing valve 66 is disposed downstream of the return gate valve 64 in this example to decrease the pressure of the hydrogen gas to a pressure suitable for flowing into the hydrogen tank 12. For example, the return pressure reducing valve 66 decreases the pressure of the hydrogen gas to a pressure higher than the reference pressure Pst and lower than the safety value Psf. In this way, the hydrogen gas flowing through the supply circuit 30 is partially returned to the hydrogen tank 12, which can prevent an excessive decrease of the internal pressure of the hydrogen tank 12, and can, in turn, allow the hydrogen pump 26 to continue appropriate discharge of the liquid hydrogen.

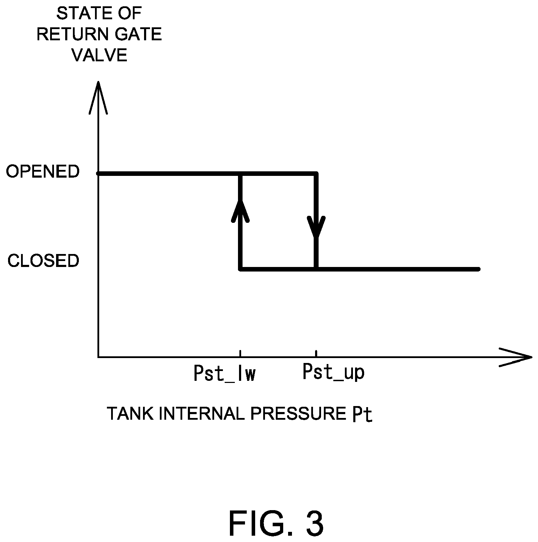

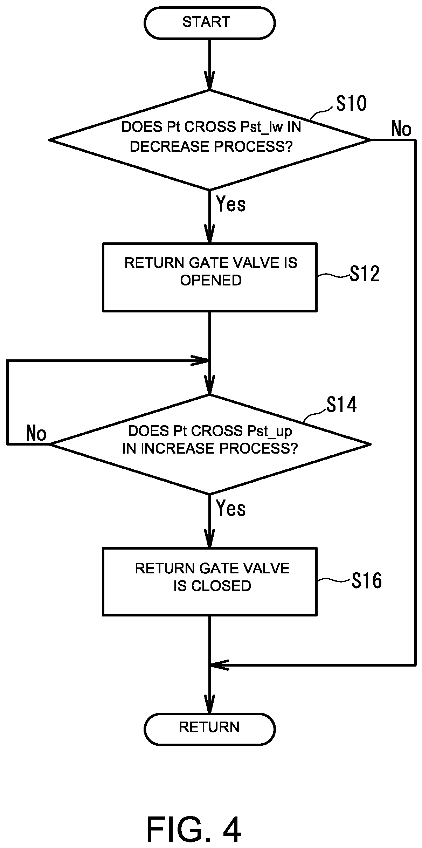

It should be noted that, of course, the reference pressure Pst is sufficiently lower than the safety value Psf which causes the boil off channel 72 to be opened. Further, the reference pressure Pst may not necessarily be set to a single value, and may be set using a certain extent of a hysteresis band. FIG. 3 shows a graph representing operation of the return gate valve 64. In FIG. 3, the horizontal axis represents the tank internal pressure Pt, and the vertical axis represents states of the return gate valve 64. FIG. 4 shows a flowchart representing a flow of open and close control of the return gate valve 64.

In an example shown in FIGs. 3 and 4, a lower reference pressure Pst_lw and an upper reference pressure Pst_up which is higher than the lower reference pressure Pst_1w are set as the reference pressure Pst. The controller 80 always monitors the tank internal pressure Pt. When the tank internal pressure Pt crosses a point of the lower reference pressure Pst_1w in the process of a decrease of the tank internal pressure Pt (Yes is determined in step S10), the controller 80 opens the return gate valve 64 (step S12).

After the return gate valve 64 is opened, the controller 80 monitors whether the tank internal pressure Pt crosses a point of the upper reference pressure Pst_up in the process of an increase of the tank internal pressure Pt (step S14). When the tank internal pressure Pt does not exceed the upper reference pressure Pst_up (No is determined in step S14), the controller 80 maintains the return gate valve 64 in its opened state. Since the return gate valve 64 is opened, the hydrogen gas is directed to flow into the hydrogen tank 12, which gradually increases the tank internal pressure Pt. Then, when the tank internal pressure Pt exceeds the upper reference pressure Pst_up (Yes is determined in step S14), the controller 80 closes the return gate valve 64 (step S16). Following this, the controller 80 returns to step S10 and repeats similar processing in the above-described steps.

It should be noted that the above-described control operation is presented as an example. The control operation to open and close the return channel 62 may be changed as appropriate so long as the tank internal pressure Pt can be maintained at or above the reference pressure Pst. For example, in the above explanation, the return gate valve 64 is controlled to be opened and closed based on a feedback value of the tank internal pressure Pt detected by the pressure sensor 78. However, the return gate valve 64 may be controlled to be opened and closed based on a parameter other than the tank internal pressure Pt. For example, the return gate valve 64 may be controlled to be opened and closed based on the discharge flow quantity Qlh of liquid hydrogen.

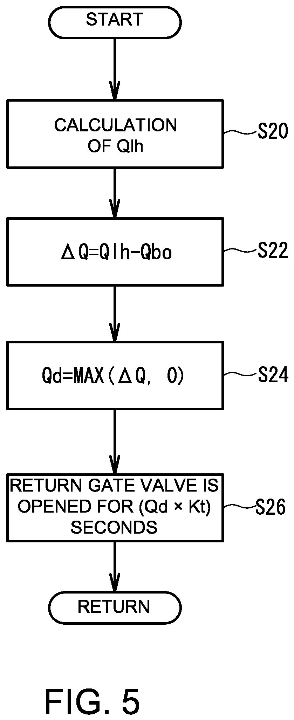

FIG. 5 shows a flowchart representing a flow of the control operation to open and close the return gate valve 64 based on the discharge flow quantity Qlh. In this case, the controller 80 calculates the discharge flow quantity Qlh of liquid hydrogen based on the motor rotation speed command Nm* which is output to the pump motor 28 (step S20). In general, the discharge flow quantity Q1h is a value proportional to the motor rotation speed command Nm*.

Next, the controller 80 subtracts the boil off quantity Qbf from the discharge flow quantity Qlh to calculate a hydrogen increase or decrease quantity ΔQ (step S22). For the boil off quantity Qbf, a predetermined fixed value may be used, or a variable value varying depending on the temperature detected by the temperature sensor 76 may be used.

Then, the controller 80 inputs the hydrogen increase or decrease quantity ΔQ and a value of zero into a MAX function to calculate a hydrogen decrease Qd = MAX (ΔQ, 0) (step S24). It should be noted that the MAX function is a function designed to output a maximum value among a plurality of variables having been input. In step S24, when the hydrogen increase or decrease quantity ΔQ is greater than zero, the MAX function returns Qd = ΔQ, and when the hydrogen increase or decrease quantity ΔQ is smaller than or equal to zero, the MAX function returns Qd = 0. When the hydrogen decrease Qd is greater than 0, the tank internal pressure Pt is gradually decreased so long as no operation is performed. Therefore, the controller 80 opens the return gate valve 64 for a time period of (Qd × Kt) seconds (step S26) where the coefficient Kt is a predetermined fixed value. Then, after the expiration of the time period of (Qd × Kt) seconds, the controller 80 closes the return gate valve 64, and returns to step S20. Here, in a case of Qd = 0, the return gate valve 64 is continuously closed, of course, and the hydrogen gas is not returned.

When the time period during which the return gate valve 64 is opened is changed based on the discharge flow quantity Qlh as described above, the hydrogen gas can be returned to the hydrogen tank 12 before the tank internal pressure Pt is decreased, which can ensure that suitable operation of the hydrogen pump 26 can be maintained.

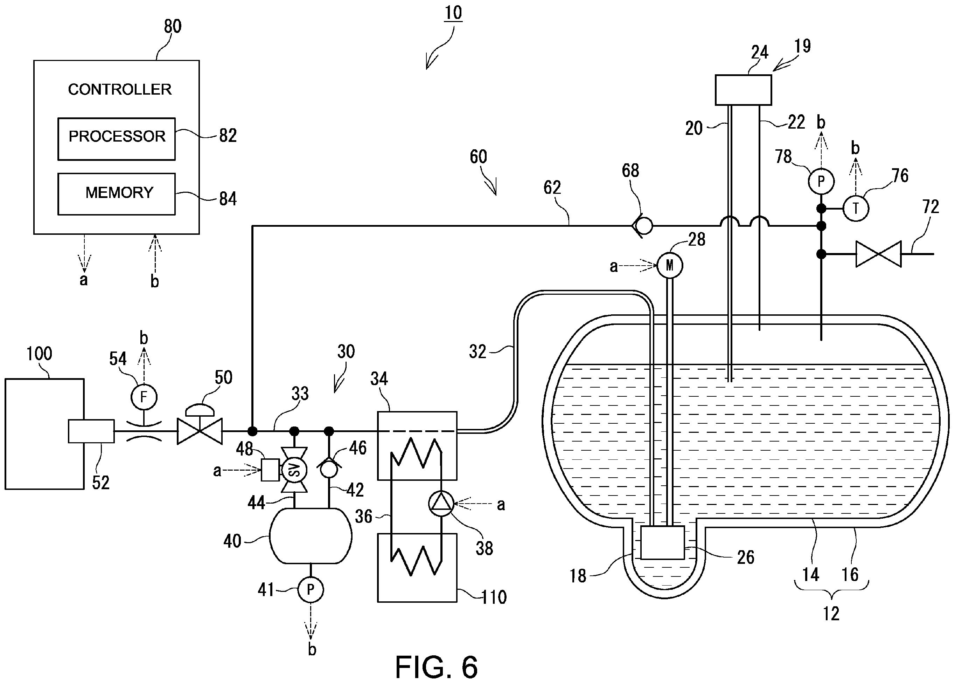

In another embodiment, the return flow channel 62 may be configured in such a manner that the return flow channel 62 will open and close depending on a release pressure of the check valve 68. For example, as illustrated in FIG. 6, only the check valve 68 may be included in the return flow channel 62 while both the return gate valve 64 and the return pressure reducing valve 66 may be omitted. In this case, a release pressure Pvo of the check valve 46 is set to a value equal to a difference between the target hydrogen gas pressure Pgh* and the reference pressure Pst. That is, the release pressure Pvo = Pgh* - Pst.

Here, a pressure on a primary side of the check valve 68 is substantially equal to the hydrogen gas pressure Pgh detected by the pressure sensor 41. In addition, the controller 80 performs the feedback control so as to match the hydrogen gas pressure Pgh with the target hydrogen gas pressure Pgh*. For this reason, the pressure on the primary side of the check valve 68 becomes substantially equal to the target hydrogen gas pressure Pgh*. When the internal pressure of the hydrogen tank 12 is decreased to be lower than the reference pressure Pst, the release pressure Pvo or a pressure higher than the release pressure Pvo is exerted on the check valve 68, to thereby open the check valve 68. This causes the hydrogen gas to flow back to the hydrogen tank 12, which increases the tank internal pressure Pt. When a pressure difference between the primary side and the secondary side of the check valve 68 becomes smaller than the release pressure Pvo after the tank internal pressure Pt is increased, the check valve 68 is automatically closed, which stops the flow of the hydrogen gas returning to the hydrogen tank 12. In this way, the return flow channel 62 can be automatically opened and closed by the check valve 68 depending on the circumstances, which can, in turn, simplify the control operation of the controller 80.

In a case where the hydrogen gas is partially returned to the hydrogen tank 12, an additional quantity of hydrogen gas is needed correspondingly. For example, in a case where a return quantity Qr of hydrogen gas is returned to the hydrogen tank 12, the liquid hydrogen system needs, as a whole, hydrogen gas in a quantity equal to the sum of the return quantity Qr and the target hydrogen gas flow quantity Qgh* supplied to the hydrogen engine 100. Therefore, in the example illustrated in FIG. 2, the sum of Qgh* + Qr should be originally set as a target value of the flow quantity. However, a control operation taking into account the return quantity Qr will be complicated, requiring an increased amount of computation.

Here, the return quantity Qr is significantly smaller than the flow quantity Qgh of the hydrogen gas to be supplied to the hydrogen engine 100. Further, in this example, the pressure chamber 40 is installed at some intermediate point in the supply circuit 30 to temporarily store the hydrogen gas. A certain extent of excess or deficiency of the hydrogen gas can be accommodated by the hydrogen gas temporarily stored in the pressure chamber 40. Therefore, in this example in which the pressure chamber 40 is installed, the return quantity Qr is ignored in the calculation of the motor rotation speed command Nm*. In this example, because the pressure chamber 40 is installed, a shortage of the hydrogen gas can be prevented even though the return quantity Qr is ignored. Further, when the return quantity Qr is ignored in the calculation of the motor rotation speed command Nm*, the amount of computation for the control operation can be reduced.

However, of course, the return quantity Qr may be incorporated in the control of the motor rotation speed. Specifically, the parameter Qgh* shown in FIG. 2 may be replaced with a parameter (Qgh*+ Qr). In this case, the return quantity Qr is calculated, for example, by the following equation: Qr = MAX (ΔQ, 0).

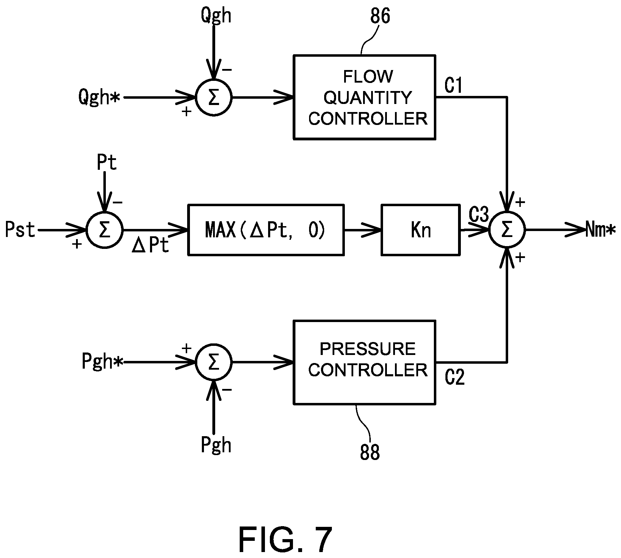

In another embodiment, the tank internal pressure Pt may be fed back, as shown in FIG. 7, to calculate the motor rotation speed command Nm*. Specifically, the controller 80 subtracts the tank internal pressure Pt from the reference pressure Pst to obtain a tank pressure deviation ΔPt. Further, the controller 80 inputs the obtained tank pressure deviation ΔPt and a value of 0 in the function MAX(), multiplies a returned value from the function by a predetermined gain Kn, and outputs the multiplied value as a third command value C3. Subsequently, the controller 80 obtains a value of the sum of the three command values C1, C2, and C3, and outputs the obtained value as the motor rotation speed command Nm*.

When the return quantity Qr of the hydrogen gas is added to the target flow quantity, or the tank internal pressure Pt is fed back as described above, a more suitable quantity of liquid hydrogen can be discharged, which can ensure that variations in pressure of the hydrogen gas can be suppressed in the gas flow channel 33.

The above-described configurations are presented by way of illustration. The configurations may be changed other than a feature that the liquid hydrogen system 10 includes the return circuit 60 through which a part of the hydrogen gas flowing through the supply circuit 30 is returned to the hydrogen tank 12. For example, although in FIG. 1 the check valve 68 is inserted in the return circuit 60, the check valve 68 may be omitted when the return gate valve 64 is provided to the return circuit 60. In addition, the return circuit 60 is provided with the pressure chamber 40 and the supply pressure reducing valve 50 in the above description, while the pressure chamber 40 and the supply pressure reducing valve 50 may be omitted. Further, in this example, the hydrogen pump 26 is explained as the booster pump which pressurizes liquid hydrogen and discharges the pressurized liquid hydrogen, while the hydrogen pump 26 may not necessarily have the capability of pressuring the liquid hydrogen. Moreover, the hydrogen engine 100 is not limited to the direct injection type engine, and may be of other types, such as, for example, a port injection type engine.

### REFERENCE SIGNS LIST

10 liquid hydrogen system, 12 hydrogen tank, 14 inner tank, 16 outer tank, 18 collector portion, 19 filling circuit, 20 filling channel, 22 release channel, 24 connector, 26 hydrogen pump (booster pump), 28 pump motor, 30 supply circuit, 32 liquid flow channel, 33 gas flow channel, 34 evaporator, 36 refrigerant flow channel, 38 refrigerant pump, 40 pressure chamber, 41 pressure sensor, 42 inflow channel, 44 outflow channel, 46 check valve, 48 chamber gate valve, 50 supply pressure reducing valve, 52 injector, 54 flowmeter, 60 return circuit, 62 return flow channel, 64 return gate valve, 66 return pressure reducing valve, 68 check valve, 72 boil off channel, 76 temperature sensor, 78 pressure sensor, 80 controller, 82 processor, 84 memory, 86 flow quantity controller, 88 pressure controller, 100 hydrogen engine, 110 heat source.

## Claims

1. A liquid hydrogen system (10), comprising:
a hydrogen tank (12) configured to be mounted on a vehicle and store liquid hydrogen;
a supply circuit (30) configured to supply a hydrogen engine (100) with a hydrogen gas which is converted from the liquid hydrogen extracted from the hydrogen tank (12);
a return circuit (60) branched from the supply circuit (30) and connected to the hydrogen tank (12), and configured to return the hydrogen gas into the hydrogen tank (12) in such a manner that the internal pressure of the hydrogen tank (12) matches or exceeds a predetermined reference pressure (Pst), the return circuit (60) comprising a return gate valve (64) which is electrically openable and closable,
a pressure sensor (41) configured to detect the internal pressure of the hydrogen tank (12) as a tank internal pressure (Pt); and
a controller (80) configured to open the return gate valve (64) when the tank internal pressure (Pt) becomes lower than the reference pressure (Pst), **characterised in that** the return circuit (60) further comprises a return pressure reducing valve (66) disposed on a hydrogen tank (12) side of the return gate valve (64) and configured to output the hydrogen gas after reducing the pressure thereof.

2. The liquid hydrogen system (10) according to claim 1, wherein
the supply circuit (30) comprises a chamber (40) which is fluid connected to the supply circuit (30) upstream of a branch point of the return circuit (60) and configured to temporarily store the hydrogen gas.

3. The liquid hydrogen system (10) according to claim 1 or 2, further comprising:
a booster pump (26) configured to pressurize the liquid hydrogen and discharge the pressurized liquid hydrogen, for extracting the liquid hydrogen from the hydrogen tank (12).

## Patentansprüche

1. Flüssigwasserstoffsystem (10), umfassend:
einen Wasserstofftank (12), der dazu ausgestaltet ist, an einem Fahrzeug montiert zu werden und flüssigen Wasserstoff zu speichern,
einen Zuführkreis (30), der dazu ausgestaltet ist, einen Wasserstoffmotor (100) mit einem Wasserstoffgas zu versorgen, das aus dem flüssigen Wasserstoff umgewandelt wird, der aus dem Wasserstofftank (12) abgezogen wird,
einen Rückführkreis (60), der von dem Zuführkreis (30) abzweigt und mit dem Wasserstofftank (12) verbunden ist, und dazu ausgestaltet ist, das Wasserstoffgas in den Wasserstofftank (12) auf solche Weise zurückzuführen, dass der Innendruck des Wasserstofftanks (12) mit einem vorbestimmten Referenzdruck (Pst) übereinstimmt oder diesen übersteigt, wobei der Rückführkreis (60) ein Rückführ-Schieberventil (64) umfasst, das elektrisch öffenbar und schließbar ist,
einen Drucksensor (41), der dazu ausgestaltet ist, den Innendruck des Wasserstofftanks (12) als einen Tankinnendruck (Pt) zu erfassen, und
ein Steuergerät (80), das dazu ausgestaltet ist, das Rückführ-Schieberventil (64) zu öffnen, wenn der Tankinnendruck (Pt) niedriger als der Referenzdruck (Pst) wird, **dadurch gekennzeichnet, dass** der Rückführkreis (60) ferner ein Rückführdruck-Reduzierventil (66) umfasst, das an einer zu dem Wasserstofftank (12) hin gelegenen Seite des Rückführ-Schieberventils (64) angeordnet und dazu ausgestaltet ist, das Wasserstoffgas nach dem Reduzieren seines Drucks auszugeben.

2. Flüssigwasserstoffsystem (10) nach Anspruch 1, wobei
der Zuführkreis (30) eine Kammer (40) umfasst, die stromaufwärts eines Abzweigungspunkts des Rückführkreises (60) in Fluidverbindung mit dem Zuführkreis (30) steht und dazu ausgestaltet ist, das Wasserstoffgas vorübergehend zu speichern.

3. Flüssigwasserstoffsystem (10) nach Anspruch 1 oder 2, ferner umfassend:
eine Druckbeaufschlagungspumpe (26), die dazu ausgestaltet ist, den flüssigen Wasserstoff mit Druck zu beaufschlagen und den druckbeaufschlagten Wasserstoff auszugeben, um den flüssigen Wasserstoff aus dem Wasserstofftank (12) abzuziehen.

## Revendications

1. Système d'hydrogène liquide (10) comprenant :
un réservoir d'hydrogène (12) configuré pour être monté sur un véhicule et stocker l'hydrogène liquide ;
un circuit d'alimentation (30) configuré pour alimenter un moteur à hydrogène (100) avec un gaz hydrogène qui est converti à partir de l'hydrogène liquide extrait du réservoir d'hydrogène (12) ;
un circuit de retour (60) dérivé du circuit d'alimentation (30) et raccordé au réservoir d'hydrogène (12) et configuré pour ramener le gaz hydrogène dans le réservoir d'hydrogène (12) de sorte que la pression interne du réservoir d'hydrogène (12) corresponde ou dépasse une pression de référence (Pst) prédéterminée, le circuit de retour (60) comprenant un robinet-vanne de retour (64) qui peut s'ouvrir et se fermer par voie électrique,
un capteur de pression (41) configuré pour détecter la pression interne du réservoir d'hydrogène (12) en tant que pression interne de réservoir (Pt) ; et
un organe de commande (80) configuré pour ouvrir le robinet-vanne de retour (64) lorsque la pression interne de réservoir (Pt) devient inférieure à la pression de référence (Pst), **caractérisé en ce que** le circuit de retour (60) comprend en outre une vanne de réduction de pression de retour (66) disposée du côté du réservoir d'hydrogène (12) du robinet-vanne de retour (64) et configurée pour produire le gaz hydrogène après avoir réduit sa pression.

2. Système d'hydrogène liquide (10) selon la revendication 1, dans lequel :
le circuit d'alimentation (30) comprend une chambre (40) qui est raccordée de manière fluidique au circuit d'alimentation (30) en amont d'un point de dérivation du circuit de retour (60) et configurée pour stocker temporairement le gaz hydrogène.

3. Système d'hydrogène liquide (10) selon la revendication 1 ou 2, comprenant en outre :
une pompe de surpression (26) configurée pour mettre sous pression l'hydrogène liquide et décharger l'hydrogène liquide mis sous pression, pour extraire l'hydrogène liquide du réservoir d'hydrogène (12).
